# EUROPÄISCHE PATENTSCHRIFT

(11) **EP 2 144 702 B1**
(45) Veröffentlichungstag und Bekanntmachung des Hinweises auf die Patenterteilung: **15.10.2014**
(21) Anmeldenummer: 08707220.3
(22) Anmeldetag: 24.01.2008
(51) Int. Cl.: B05B 1/08

(54) **EINSATZKÖRPER FÜR EINE SPRITZDÜSENANORDNUNG SOWIE SPRITZDÜSENANORDNUNG**
INSERTION BODY FOR A SPRAY NOZZLE ASSEMBLY, AND SPRAY NOZZLE ASSEMBLY
PIÈCE D'INSERTION POUR SYSTÈME À BUSE DE PULVÉRISATION, ET SYSTÈME À BUSE DE PULVÉRISATION CORRESPONDANT

(30) Priorität: 08.03.2007 DE 102007011331
(43) Veröffentlichungstag der Anmeldung: 20.01.2010
(73) Patentinhaber: A. RAYMOND ET CIE, 38000 Grenoble (FR)
(72) Erfinder: UTZ, Daniel, 79415 Bad Bellingen (DE)
(74) Vertreter: RACKETTE Partnerschaft Patentanwälte
(86) Internationale Anmeldenummer: PCT/EP2008/000507
(87) Internationale Veröffentlichungsnummer: WO 2008/107043

(56) Entgegenhaltungen:
- US-A1- 2004 251 315

## Beschreibung

Die Erfindung betrifft einen Einsatzkörper für eine Spritzdüsenanordnung gemäss dem Oberbegriff des Patentanspruches 1 sowie eine mit einem derartigen Einsatzkörper ausgestattete Spritzdüsenanordnung.

Ein derartiger Einsatzkörper und eine derartige Spritzdüsenanordnung sind aus US 2004/0251315 A1 bekannt. Dieses gattungsgemäße Dokument offenbart einen Einsatzkörper für eine Spritzdüsenanordnung zum Benetzen einer Oberfläche mit einem über einen Einsatzeinlasskanal mit Flüssigkeit beaufschlagbaren Fächerstrahlerzeugungsabschnitt zum Erzeugen eines oszillierenden Fächerstrahls, der aus einer Fächerstrahlaustrittsöffnung austritt. Weiterhin zeigt dieses Dokument einen Punktstrahlerzeugungsabschnitt, der einen Sammelraum aufweist, der mit dem Einsatzeinlasskanal in fluidmechanischer Verbindung steht, und der über einen sich von dem Sammelraum zu einer Punktstrahlauslassöffnung erstreckenden Punktstrahlkanal zum Erzeugen wenigstens eines Punktstrahls in Richtung des Fächerstrahls verfügt.

Ein weiterer Einsatzkörper ist aus US 4,463,904 A bekannt. Dieser vorbekannte Einsatzkörper verfügt über einen Fächerstrahlerzeugungsabschnitt, der über einen Einsatzeinlasskanal mit einer Flüssigkeit beaufschlagbar und zum Erzeugen eines oszillierenden Fächerstrahls eingerichtet ist, der aus einer Fächerstrahlaustrittsöffnung austritt, um eine Oberfläche, typischerweise die Windschutzscheibe eines Kraftfahrzeugs, zu benetzen. Zwar ist mit einer mit einem derartigen Einsatzkörper ausgestatteten Spritzdüsenanordnung bei bestimmten Temperaturverhältnissen ein verhältnismäßig großflächiger Fächerstrahl erzeugbar, allerdings besteht das Problem, dass bei ungünstigen fluidmechanischen Randbedingungen, beispielsweise einer tiefen Temperatur oder einer hohen Relativgeschwindigkeit der Spritzdüsenanordnung gegenüber dem umgebenden Medium, wie dies beispielsweise bei einem mit einer verhältnismäßigen hohen Geschwindigkeit fahrenden Kraftfahrzeug der Fall ist, sich der Fächerstrahl nicht ausbildet oder aufgrund des Winddrucks nicht auf die zum Benetzen vorgesehenen Bereiche der Oberfläche trifft.

Der Erfindung liegt die Aufgabe zugrunde, einen Einsatzkörper für eine Spritzdüsenanordnung der eingangs genannten Art anzugeben, mit dem auch unter ungünstigen Randbedingungen die Oberfläche zuverlässig großflächig benetzbar ist.

Diese Aufgabe wird bei einem Einsatzkörper der eingangs genannten Art erfindungsgemäß mit den kennzeichnenden Merkmalen des Patentanspruches 1 gelöst.

Diese Aufgabe wird bei einer Spritzdüsenanordnung erfindungsgemäß weiterhin mit einer Spritzdüsenanordnung gelöst, die einen erfindungsgemäßen Einsatzkörper aufweist.

Dadurch, dass der Einsatzkörper neben dem Fächerstrahlerzeugungsabschnitt einen Punktstrahlerzeugungsabschnitt mit zwei Punktstrahlkanälen aufweist, dessen Vorraum mit dem Einsatzeinlasskanal in fluidmechanischer Verbindung steht und über zwei sich an einen sich erweiternden Sammelraum anschließende Punktstrahlkanäle Flüssigkeit in Richtung des Fächerstrahls ausgeben kann, sind somit neben dem gegenüber äußeren Einflüssen empfindlicher reagierenden Fächerstrahl zwei in der Regel völlig unproblematisch erzeugbare und damit zuverlässig vorhandene Punktstrahlen vorhanden, die auch bei Kollabieren des Flüssigkeitsstrahls aufgrund ungünstiger fluidmechanischer Randbedingungen oder Wegdrücken des Flüssigkeitsstrahls aufgrund hohen Winddrucks die Oberfläche großflächig benetzen.

Weitere zweckmäßige Ausgestaltungen der Erfindung sind Gegenstand der Unteransprüche.

Nachfolgend wird ein Ausführungsbeispiel der Erfindung unter Bezug auf die Figuren der Zeichnung erläutert. Es zeigen:
- Fig. 1: in einer anschaulichen perspektivischen Ansicht eine Spritzdüsenanordnung mit einem erfindungsgemäßen Einsatzkörper zum Erzeugen eines Fächerstrahls und zwei Punktstrahlen,
- Fig. 2: in einer Vorderansicht die Spritzdüsenanordnung gemäss Fig. 1,
- Fig. 3: in einer teilgeschnittenen Seitenansicht die Spritzdüsenanordnung gemäss Fig. 2,
- Fig. 4: einen Schnitt des Einsatzkörpers gemäss dem Ausführungsbeispiel von Fig. 3 entlang der Linie IV - IV und
- Fig. 5: einen Schnitt des Einsatzkörpers gemäss dem Ausführungsbeispiel von Fig. 3 entlang der Linie V - V.

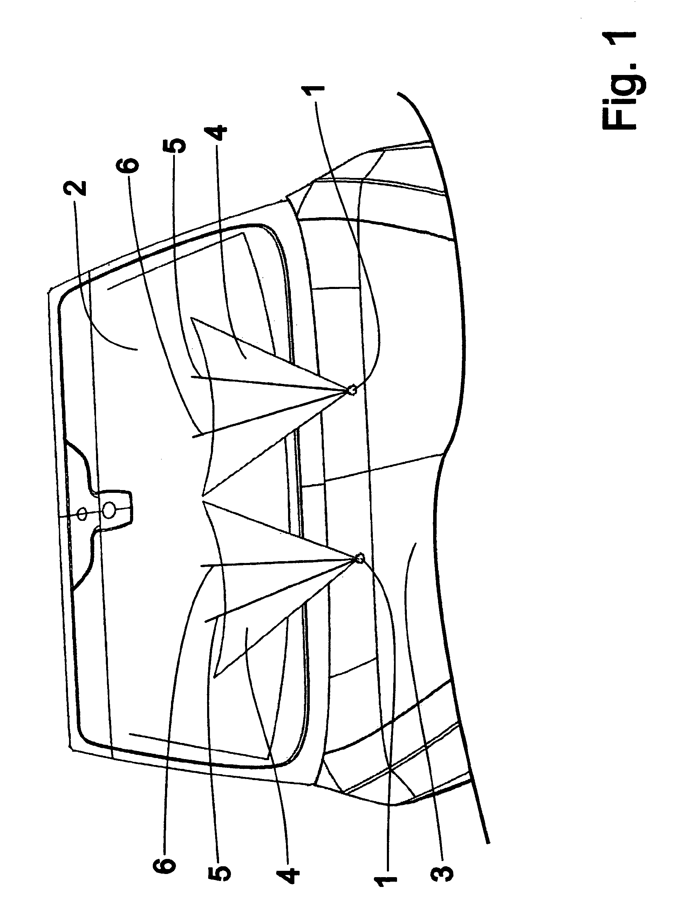

Fig. 1 zeigt in einer anschaulichen perspektivischen Ansicht ein Ausführungsbeispiel der Erfindung mit zwei identisch aufgebauten Spritzdüsenanordnungen 1, die im Bereich einer Windschutzscheibe 2 mit einer Motorhaube 3 eines Kraftfahrzeugs verbunden sind. Aus Fig. 1 ist ersichtlich, dass mit jeder Spritzdüsenanordnung 1 in einer weiter unten näher erläuterten Art und Weise ein Fächerstrahl 4, der sich von der jeweiligen Spritzdüsenanordnung 1 über einen größeren Winkelbereich quer zur Fahrtrichtung von typischerweise etwa 20 Grad bis etwa 50 Grad in einer die Fläche der Windschutzscheibe 2 schneidenden Ebene erstreckt, und ein erster Punktstrahl 5 sowie ein zweiter Punktstrahl 6 erzeugbar sind, die sich von jeder Spritzdüsenanordnung 1 jeweils vorzugsweise in etwa in der Mitte zwischen der Mittellinie des Fächerstrahls 4 sowie dessen Rändern erstrecken und die Windschutzscheibe 2 jeweils wie ein fadenförmiger Flüssigkeitsstrahl mit einem kontinuierlichen volumenführenden Kern beaufschlagen.

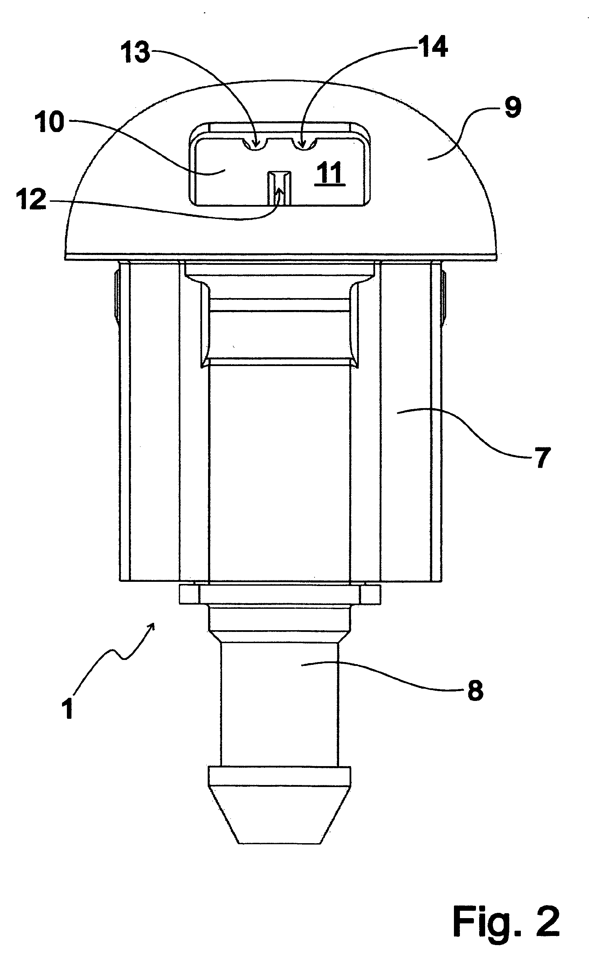

Fig. 2 zeigt in einer Vorderansicht eine Spritzdüsenanordnung 1 gemäss dem Ausführungsbeispiel von Fig. 1. Die Spritzdüsenanordnung 1 verfügt über einen Düsenkörper 7, an den ein Anschlussstutzen 8 zum Anschluss an eine in Fig. 2 nicht dargestellte Flüssigkeitszuführeinrichtung angeformt ist. Auf der dem Anschlussstutzen 8 gegenüberliegenden Seite des Düsenkörpers 7 ist ein Düsenkopf 9 ausgebildet, in den ein Einsatzkörper 10 gemäss der Erfindung fluidmechanisch abgedichtet eingefügt ist.

Aus Fig. 2 lässt sich erkennen, dass der einstückige Einsatzkörper 10 mit einer in der Darstellung gemäss Fig. 2 dem Betrachter zugewandten rechteckförmigen Stirnfläche 11 ausgebildet ist, die von einer an eine lange Randseite angrenzenden und sich von dieser langen Randseite bis in etwa in die Mitte der Stirnfläche 11 erstreckenden, schmalen rechteckförmigen Fächerstrahlaustrittsöffnung 12 durchbrochen ist. An der anderen langen Randseite der Stirnfläche 11 sind eine erste Punktstrahlaustrittsöffnung 13 und eine zweite Punktstrahlaustrittsöffnung 14 ausgebildet, die in Richtung der betreffenden langen Randseite geöffnet, halbkreisförmig ausgebildet und symmetrisch beidseitig der Fächerstrahlaustrittsöffnung 12 angeordnet sind.

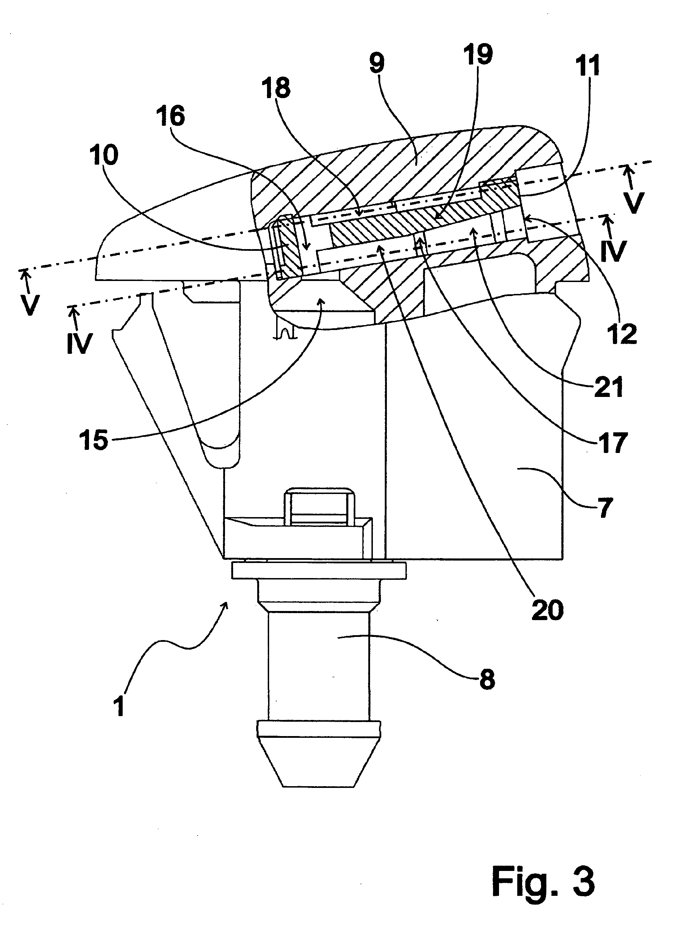

Fig. 3 zeigt die Spritzdüsenanordnung 1 gemäss Fig. 2 in einer im Bereich des Einsatzkörpers 10 geschnittenen Seitenansicht. Fig. 3 lässt sich entnehmen, dass ein sich von dem Anschlussstutzen 8 durch den Düsenkörper 7 erstreckender Zuführkanal 15 in einen auf der der Stirnfläche 11 gegenüberliegenden Seite des Einsatzkörpers 10 in dem Einsatzkörper 10 ausgebildeten Einsatzeinlasskanal 16 mündet, wobei sich der Einsatzeinlasskanal 16 über die gesamte Dickenrichtung des quaderförmigen Einsatzkörpers 10 erstreckt und auf den dem Zuführkanal 15 abgewandten Seite durch den Düsenkopf 9 abgedichtet ist.

Der Einsatzeinlasskanal 16 steht zum einem mit einem Fächerstrahlerzeugungsabschnitt 17 und zum anderen mit einem Punktstrahlerzeugungsabschnitt 18 in Verbindung, wobei sich sowohl der Fächerstrahlerzeugungsabschnitt 17 als auch der Punktstrahlerzeugungsabschnitt 18 von dem Einsatzeinlasskanal 16 bis zu der Stirnfläche 11 erstrecken und zu der Außenseite des Einsatzkörpers 10 offen sind, so dass der Düsenkopf 9 für die außenseitige Abdichtung des Einsatzkörpers 10 sorgt, während innenseitig des Einsatzkörpers 10 zwischen dem Fächerstrahlerzeugungsabschnitt 17 und dem Punktstrahlerzeugungsabschnitt 18 eine Trennwand 19 ausgebildet ist.

Aus Fig. 3 lässt sich entnehmen, dass der Fächerstrahlerzeugungsabschnitt 17 einen auf der einen Seite mit dem Einsatzeinlasskanal 16 in Verbindung stehenden Vorraum 20 mit einer gleichbleibenden Höhe aufweist, an den sich auf der dem Einsatzeinlasskanal 16 abgewandten Seite ein Expansionsraum 21 mit einer von dem Vorraum 20 in Richtung der Stirnfläche 11 zunehmenden Höhe anschließt.

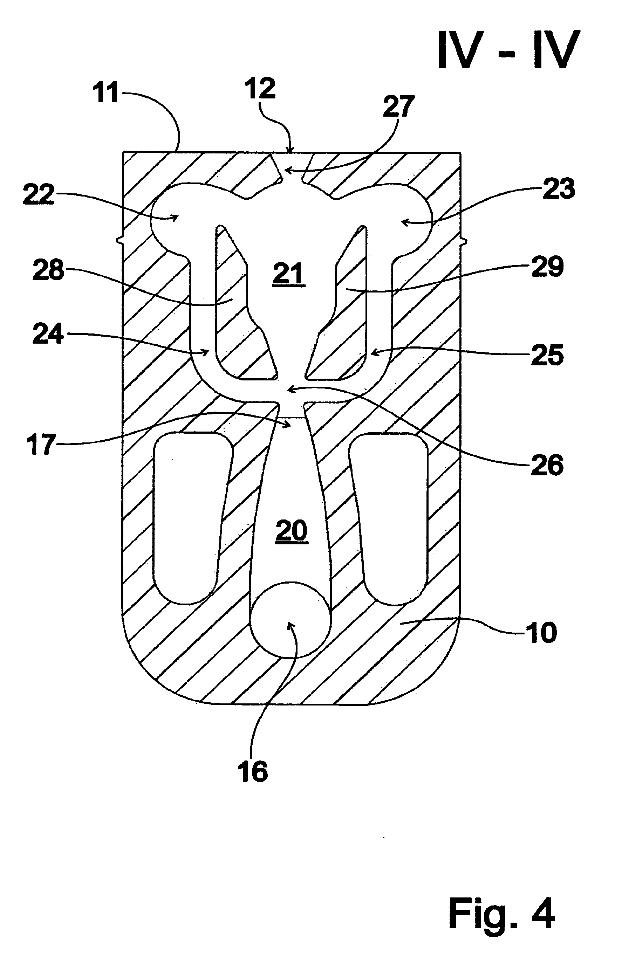

Fig. 4 zeigt den Einsatzkörper 10 gemäss Fig. 3 im Schnitt entlang der im Bereich des Fächerstrahlerzeugungsabschnittes 17 liegenden Linie IV - IV. Fig. 4 lässt sich entnehmen, dass sich der Vorraum 20 von dem Einsatzeinlasskanal 16 in Richtung des Expansionsraumes 21 in der Breite verengt und dass beidseitig des Expansionsraumes 21 ausgehend von in dem der Stirnfläche 11 zugewandten Endbereich ausgebildeten, nach außen ausgebuchteten Druckimpulsrückführbereichen 22, 23 Rückführkanäle 24, 25 ausgebildet sind, die in einen in der Engstelle zwischen dem Vorraum 20 und dem sich in Richtung der Stirnfläche 11 in der Breite stufenartig erweiternden Expansionsraum 21 ausgebildeten Kreuzungsbereich 26 münden. Von dem der Stirnfläche 11 zugewandten Ende des Expansionsraumes 21 erstreckt sich mittig ein Fächerstrahlaustrittskanal 27, der sich von dem Expansionsraum 21 zu der Fächerstrahlaustrittsöffnung 12 in der Breite erweitert.

Mit diesem Aufbau des Fächerstrahlerzeugungsabschnittes 17 ist in an sich bekannter Art und Weise über eine Druckimpulsrückkopplung von der der Stirnfläche 11 zugewandten Seite des Expansionsraumes 21 über die Druckimpulsrückführbereiche 22, 23 und die Rückführkanäle 24, 25 ein Druckimpuls in den Kreuzungsbereich 26 einkoppelbar, der wieder in den Expansionsraum 21 eingespeist wird, und durch Reflexion an den sich stufenweise erweiternden, an Separierwänden 28, 29 ausgebildeten Begrenzungsflächen des Expansionsraumes 21 zu der in Zusammenhang mit Fig. 1 erläuterten und dargestellten Gestalt des Fächerstrahles 4 führt.

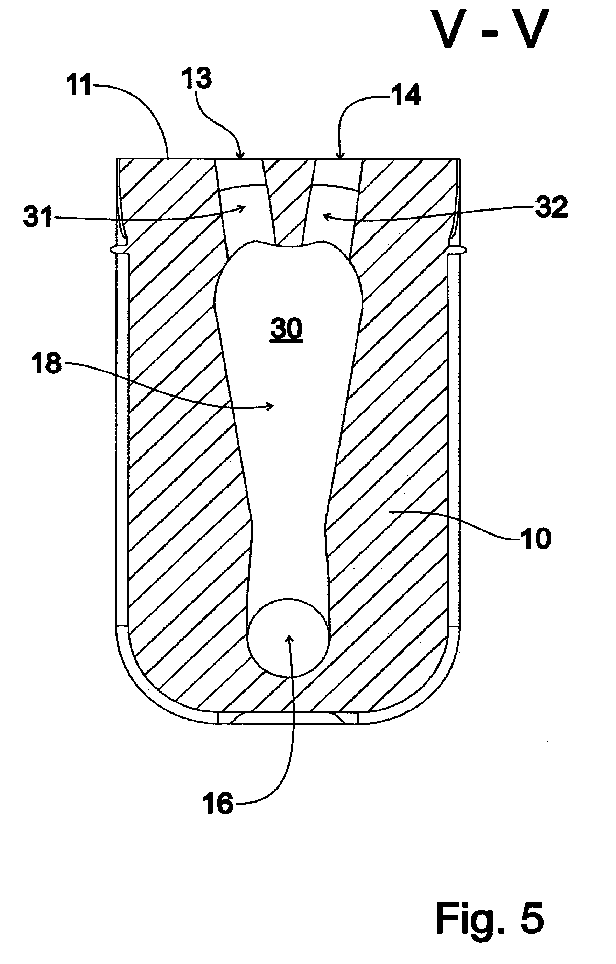

Fig. 5 zeigt den Einsatzkörper 10 gemäss Fig. 3 im Schnitt entlang der im Bereich des Punktstrahlerzeugungsabschnittes 18 liegenden Linie V - V. Aus Fig. 5 ist ersichtlich, dass in dem Punktstrahlerzeugungsabschnitt 18 ein Sammelraum 30 ausgebildet ist, der sich von dem Einsatzeinlasskanal 16 zunächst mit einem gleichbleibenden und anschließend mit einem sich erweiternden Querschnitt in Richtung der Stirnfläche 11 erstreckt. Auf der dem Einsatzeinlasskanal 16 abgewandten Seite münden in den Sammelraum 30 zwei symmetrisch zu einer Mittellängsachse angeordnete Punktstrahlkanäle 31, 32, die einen gegenüber dem Querschnitt des Sammelraumes 30 in dem dem Einsatzeinlasskanal 16 abgewandten Bereich wesentlich kleineren Querschnitt aufweisen und in jeweils eine Fächerstrahlaustrittsöffnung 13, 14 münden. Aufgrund dieser Ausgestaltung des Punktstrahlerzeugungsabschnittes 18 treten aus den Punktstrahlaustrittsöffnungen 13, 14 gerichtete Punktstrahlen mit einer über den Strahlweg verhältnismäßig geringen Aufweitung zum Erzielen der in Zusammenhang mit der in Fig. 1 erläuterten und dargestellten Gestalt der Punktstrahlen 5, 6 aus.

## Patentansprüche

1. Einsatzkörper für eine Spritzdüsenanordnung (1) zum Benetzen einer Oberfläche (2) mit einem über einen Einsatzeinlasskanal (16) mit Flüssigkeit beaufschlagbaren Fächerstrahlerzeugungsabschnitt (17) zum Erzeugen eines oszillierenden Fächerstrahls (4), der aus einer Fächerstrahlaustrittsöffnung (12) austritt, wobei ein Punktstrahlerzeugungsabschnitt (18) vorhanden ist, der einen Sammelraum (30) aufweist, der mit dem Einsatzeinlasskanal (16) fluidmechanisch in Verbindung steht, und der über einen sich von dem Sammelraum (30) zu einer Punktstrahlaustrittsöffnung (13, 14) erstreckenden Punktstrahlkanal (31, 32) zum Erzeugen eines Punktstrahls (5, 6) in Richtung des Fächerstrahls (4) verfügt, **dadurch gekennzeichnet, dass** in dem Punktstrahlerzeugungsabschnitt (18) ein Sammelraum (30) ausgebildet ist, der sich von dem Einsatzeinlasskanal (16) zunächst mit einem gleichbleibenden und anschließend mit einem sich erweiternden Querschnitt in Richtung einer Stirnfläche (11) erstreckt, dass auf der dem Einsatzeinlasskanal (16) abgewandten Seite in den Sammelraum (30) zwei Punktstrahlkanäle (31, 32) münden, die einen gegenüber dem Querschnitt des Sammelraumes (30) in dem dem Einsatzeinlasskanal (16) abgewandten Bereich wesentlich kleineren Querschnitt aufweisen.

2. Einsatzkörper nach Anspruch 1, **dadurch gekennzeichnet, dass** die Punktstrahlaustrittsöffnungen (13, 14) symmetrisch beidseitig der Fächeraustrittsöffnung (12) liegen.

3. Einsatzkörper nach Anspruch 1 oder Anspruch 2, **dadurch gekennzeichnet, dass** der Einsatzkörper (10) einstückig sowie quaderförmig ausgebildet ist, wobei in dessen großflächigen Außenseiten der Fächerstrahlerzeugungsabschnitt (17) und der Punktstrahlerzeugungsabschnitt (18) eingeformt sind.

4. Spritzdüsenanordnung mit einem Einsatzkörper (10) gemäss Anspruch 3, wobei der Einsatzkörper (10) in einem Düsenkopf (9) angeordnet ist, der den Fächerstrahlerzeugungsabschnitt und den Punktstrahlerzeugungsabschnitt (18) nach außen abdichtet.

## Claims

1. Insert for a spray nozzle assembly (1) for wetting a surface (2), having a fan-jet generating portion (17), to which liquid can be applied through an insert inlet passage (16), for generating an oscillating fan jet (4) which emerges from a fan-jet exit opening (12), there being a pencil-jet generating portion (18) which has a collecting chamber (30) which communicates by fluid mechanics with the insert inlet passage (16) and which has a pencil-jet passage (31, 32), extending from the collecting chamber (30) to a pencil-jet exit opening (13, 14), for generating a pencil jet (5, 6) in the direction followed by the fan jet (4), **characterised in that** there is formed in the pencil-jet generating portion (18) a collecting chamber (30) which extends from the insert inlet passage (16) towards an end-face (11) initially at a constant cross-section and then at an enlarging cross-section, and **in that**, at the end remote from the insert inlet passage (16), there open into the collecting chamber (30) two pencil-jet passages (31, 32) which are of a cross-section substantially smaller than the cross-section of the collecting chamber (30) in the region remote from the insert inlet passage (16).

2. Insert according to claim 1, **characterised in that** the pencil-jet exit openings (13, 14) are situated in symmetrical positions on the two sides of the fan exit opening (12).

3. Insert according to claim 1 or claim 2, **characterised in that** the insert (10) is of a one-piece and cuboid form, the fan-jet generating portion (17) and the pencil-jet generating portion (18) being formed in the outer faces of largest area thereof.

4. Spray nozzle assembly having an insert (10) according to claim 3, wherein the insert (10) is arranged in a nozzle head (9) which seals off the fan-jet generating portion and the pencil-jet generating portion (18) from the exterior.

## Revendications

1. Elément rapporté pour un agencement de buse de projection de liquide (1) destiné à arroser une surface (2), comprenant une portion de génération de jet en éventail (17) pouvant être alimentée en liquide par l'intermédiaire d'un canal d'amenée rapporté (16) pour générer un jet en éventail (4) à mouvement alternatif, qui sort par une ouverture de sortie de jet en éventail (12), comportant en l'occurrence une portion de génération de jets ponctuels (18) qui comporte un espace collecteur (30) qui est en liaison avec le canal d'amenée rapporté (16) dans les conditions inhérentes à la mécanique des fluides et qui est muni d'un canal de jet ponctuel (31, 32) qui s'étend depuis l'espace collecteur (30) jusqu'à une ouverture de sortie de jet ponctuel (13, 14) pour générer un jet ponctuel (5, 6) dans la direction du jet en éventail (4), **caractérisé en ce qu'**il est prévu dans la portion de génération de jets ponctuels (18) un espace collecteur (30) qui s'étend à partir du canal d'amenée rapporté (16), en présentant pour commencer une section transversale constante qui va ensuite en s'évasant dans la direction de la surface frontale (11), **en ce que** deux canaux de jets ponctuels (31, 32) débouchent dans l'espace collecteur (30) sur le côté opposé au canal d'amenée rapporté (16), qui présentent dans la zone opposée au canal d'amenée rapporté (16) une section transversale notablement plus réduite comparativement à la section transversale de l'espace collecteur (30).

2. Elément d'insertion selon la revendication 1, **caractérisé en ce que** les ouvertures de sortie des jets ponctuels (13, 14) sont disposées symétriquement de part et d'autre de l'ouverture de sortie du jet en éventail (12).

3. Elément d'insertion selon la revendication 1 ou la revendication 2, **caractérisé en ce que** l'élément rapporté (10) est réalisé selon une confguration monobloc ainsi que parallélépipédique, la portion de génération de jet en éventail (17) et la portion de génération de jet ponctuel étant en l'occurrence réalisées solidaires par formage de ses côtés extérieurs à grande surface.

4. Agencement de buses de projection de liquide muni d'un élément rapporté (10) selon la revendication 3, l'élément rapporté (10) étant en l'occurrence disposé dans une tête de buse de projection (9), qui assure vis-à-vis de l'extérieur l'étanchéité de la portion de génération de jet en éventail et de la portion de génération de jet ponctuel (18).
